# EUROPEAN PATENT SPECIFICATION

(11) **EP 2 714 826 B1**
(45) Date of publication and mention of the grant of the patent: **15.11.2023**
(21) Application number: 12726942.1
(22) Date of filing: 15.05.2012
(51) Int. Cl.: C09D 163/00, B32B 7/10, B32B 7/12, C09D 133/14

(54) **COATING SYSTEM**
BESCHICHTUNGSSYSTEM
SYSTÈME DE REVÊTEMENT

(30) Priority: 24.05.2011 US 201161489378 P
(43) Date of publication of application: 09.04.2014
(73) Proprietor: SWIMC LLC, Cleveland, Ohio 44115 (US)
(72) Inventor: STAUNTON, Thomas J., Euclid, OH 44123 (US); TANG, Weilin, Solon, OH 44139 (US); WAYTON, Brian J., Medina, OH 44256 (US)
(74) Representative: Novagraaf Group
(86) International application number: PCT/US2012/037914
(87) International publication number: WO 2012/162026

(56) References cited:
- EP-A2- 1 367 146
- US-A- 4 721 747
- US-A- 5 814 137
- US-A1- 2005 148 752
- US-A1- 2010 159 144
- US-B1- 6 605 365
- JIONG LIU ET AL: "Effect of Processing Conditions on Adhesion Performance of a Sol Gel Reinforced Epoxy/Aluminum Interface", JOURNAL OF ADHESION SCIENCE AND TECHNOLOGY, ZEIST, NL, vol. 22, 1 January 2008 (2008-01-01), pages 1159-1180, XP009161277, ISSN: 0169-4243, DOI: 10.1163/156856108X312635

## Description

This application claims priority to United States Provisional Patent Application 61/489,378 filed on May 24, 2011.

Conventional aerospace coating systems comprise two coating elements: (1) a primer coat, which generally serves as an anti-corrosive; (2) a decorative coat, which primarily serves to provide color, decoration, and UV durability. Advanced aerospace coatings systems comprise three coating elements: (1) a primer coat, which generally serves as an anti-corrosive; (2) a decorative coat, which primarily serves to provide color and decoration; and (3) a transparent topcoat, which may protect the underlying layers from UV degradation, weathering, and the like.

To facilitate adhesion of the primer coat to the substrate, which, in aerospace applications is typically a metal substrate, such as aluminum or titanium, a number of substrate pre-treatments have been developed. One common pre-treatment involves coating the surface of the substrate with a material that generates a sol-gel film. The term "sol-gel", a contraction of solution-gelation, refers to a series of reactions where a soluble organometallic species, typically a metal alkoxide or metal salt, hydrolyzes to form a metal hydroxide and further condenses to form metal-oxygen-metal bonds for example Si-0-Si, Si-0-Zr, and Si-0-AI.

The description and use of sol-gel films has been widely discussed, elsewhere. Briefly, sol-gel films promote adhesion by having a metallic portion, that is capable of bonding covalently with the metal and having an organic portion that is capable of bonding covalently with the resin of a subsequently applied coating.

The strength and durability of the sol-gel film depends upon chemical and micro-mechanical interactions at the surface of the metal involving, for example, the tendency of the sol-gel film to rehydrate and the porosity and microstructure of the metal. When properly implemented, the sol-gel coatings provide surface stability for paint adhesion. Tue sol-gel process relies on a combination of hydrolysis and condensation reactions. Tue relative rates of hydrolysis and condensation, and the structure and characteristics of the resultant sol-gel film are controlled by a number of factors, which may include such things as the pH of the environment and the concentration of reagents and catalysts such as acids or bases.

A sol-gel composition that is particularly useful for coating aluminum and titanium surfaces is based on a combination of organometallic and organosilane components. The preferred organometallic compound for use in a sol-gel for coating aluminum and titanium surfaces is an alkoxy metallic compound, and more preferably an alkoxy zirconium compound. Because of its ready commercial availability, Zr (IV) n-propoxide is particularly preferred as the organometallic compound. In addition to covalently bonding to the metal surface, the organozirconium compound also serves to minimize the diffusion of oxygen to the surface and to stabilize the metal-resin interface. Epoxy-functionalized silanes are the preferred organosilanes because of their stability in solution and their ability to crosslink with common, aerospace epoxy or urethane adhesives. The silane is acid-base neutral, so its presence in the sol mixture does not increase the relative hydrolysis and condensation rates of the alkoxy metallic compounds. Sols including the organosilanes are relatively easy to prepare and to apply with reproducible results. US 6 605 365 B1 describes pigmented sol-gel coatings bound to a paint layer via a primer layer. US 2010/159144 describes corrosion control coatings for metals, wherein a sol-gel coat is present on the metal surface and wherein at least one additional coat is applied thereon.

One widely used sol-gel formulation is Boegel-EPII^{™}, developed by The Boeing Company, Seattle, Wash. Tue Boegel-EPII^{™} composition is a combination of 3-glycidoxypropyltrimefhoxysilane (GTMS) and Zr (IV) n-propoxide which is reacted in the presence of an acetic acid stabilizer. The GTMS has an active epoxy group which can react with common epoxy and urethane resins. GTMS does not form strong Lewis acid-base interactions with the hydrated metal oxide substrate. The zirconium in the mixture tends to react more quickly with the oxide surface of the metal, allowing the desired stratification of the sol-gel film with the epoxy groups of the silane coupling agents oriented toward the resin layer.

In conventional coating systems, a primer coat is applied on top of the sol-gel treated substrate. The primer coat, which typically contains corrosion inhibitors, has the primary functions of inhibiting substrate corrosion and sol-gel film destabilization, which can result from abrasion or exposure to environmental agents, such as salts, water, deicing solutions, and the like, and to provide a surface on which the decorative coat(s) can be applied.

Tue decorative coat, which typically contains the colored pigments, imparts color to the substrate. One or more layers of a decorative coat may be applied. Once the decorative coat(s) have been applied, one or more coats of a transparent coat may be applied to protect the decorative coat.

Application of a coating system as just described is a time consuming process as each element must be applied in one or more coats and allowed to cure appropriately. Failure in any one of the elements may be detrimental to the performance of the entire system leading to aesthetic or physical damage to the substrate, necessitating repair. Moreover, any incompatibility between the layers can result in system failure.

It would be beneficial to reduce the number of elements in a coating system to a minimum necessary to adequately protect the substrate from environmental exposure and to provide a durable and decoratively pleasing appearance. By reducing the number of elements in the system, the propensity for system failure may be reduced. There are fewer elements that can contribute to system failure and fewer, potentially disparate interactions between coating layers. Moreover, limiting the number of elements in a coating system may reduce application and refinish time, weight, and application and repair cost.

To eliminate an element from the coating system places burdens on the remaining components to perform the functions of the eliminated element, either individually or collectively.

According to the present invention, a coating system for a substrate that has been pretreated with a sol-gel film comprises: (1) a decorative coat applied directly on top of the sol-gel film, wherein the decorative coating comprises: (a) a polyepoxy compound; (b) a polyamine crosslinker suitable for crosslinking the polyepoxy compound, wherein the amount of the crosslinker in the coating composition provides an epoxy to amine molar ratio of 0.5 to 2.0; (c) one or more opacifying pigments and (d) a suitable catalyst for the crosslinking reaction; and (2) optionally, a transparent clearcoat applied on top of the decorative coat. The present invention is notable for the elimination of a separate primer layer as part of the coating system, thus decreasing the number of elements in the system while maintaining or improving coating performance, durability, and decorative functionality.

Tue decorative coating may be a 2 part (2k) solvent borne, pigmented coating composition comprising, a polyepoxy compound and a polyamine crosslinker suitable for crosslinking the polyepoxy compound.

Suitable polyepoxy compounds have epoxy functionalities of at least two or more and may include heterocyclic polyepoxides having two or more epoxides, such as triglycidylisocyanurate (TGIC); polyepoxides of aromatic polyols such as the diglycidyl ether of 2,2-bis(4-hydroxylphenyl)propane (bisphenol A), bisphenol F, and tetrabromobisphenol A, and the like; low molecular weight polymers derived from the foregoing aromatic polyols and their diglycidyl ethers; cycloaliphatic polyepoxides, such as 3',4'-epoxycyclohexylmethyl 3,4-epoxycyclohexylcarboxylate, dicyclopentadiene dioxide, and the like; glycidyl esters of aromatic or aliphatic polyacids, such as the diglycidyl ester of hexahydrophthalic acid; low equivalent weight epoxy-functional acrylic resins; polyepoxides of aliphatic polyols such as the diglycidyl ether of 1,4-butanediol; and polyepoxides of amino-alcohols, such as the tri-glycidyl ether-amine of 4-amino phenol.

Particularly useful polyepoxy compounds may include glycidyl esters of aromatic and aliphatic polyacids, for example glycidyl esters of polyacids such as terephthalic, isophthalic, phthalic, methylterephthalic, trimellitic, pyromellitic, adipic, sebacic, succinic, malic, fumaric, tetrahydrophthalic, methyltetrahydrophthalic, hexahydrophthalic, and methylhexahydrophthalic acid. These acids may be copolymerized with other alpha, beta-ethylenically unsaturated monomers, for example esters of acrylic acid or methacrylic acid, such as methyl, ethyl, hexyl, 2-ethoxy ethyl, t-butyl, 2-hydroxyethyl, and 2,2-di(p-hydroxy)phenyl esters, and the like; styrene; substituted styrene such as alpha-methyl styrene; and vinyl esters, such as vinyl acrylate and vinyl methacrylate.

A wide variety of polyepoxy acrylic resins may be used in the coating compositions of the invention. Typically, the polyepoxy acrylic resins should have at least two epoxy groups per molecule, including saturated or unsaturated, aliphatic, cycloaliphatic or heterocyclic compounds and may be substituted with substituents such as halogen atoms, alkyl groups, ether groups and the like. Suitable epoxy functional acrylic resins may be produced by polymerizing epoxy functional acrylates alone or in combination with other vinyl monomers, including other acrylic esters, styrene and substituted styrenes, as specified before. Examples of epoxy functional acrylate monomers include glycidyl acrylate, glycidyl methacrylate, beta-methylglycidyl acrylate, beta-methylglycidyl methacrylate, N-glycidyl acrylic acid amide and the like, among which glycidyl acrylate and glycidyl methacrylate are particularly useful.

The polyepoxy resin may be blended with one or more of a variety of other resins, such as other acrylic resins, polyesters, alkyd and modified alkyd resins, to form a useful resin system.

Nonlimiting examples of suitable polyamine crosslinking agents include primary or secondary diamines or polyamines in which the radicals attached to the nitrogen atoms can be saturated or unsaturated, aliphatic, alicyclic, aromatic, aromatic-substituted-aliphatic, aliphatic-substituted-aromatic, and heterocyclic. Nonlimiting examples of suitable aliphatic and alicyclic diamines include 1,2-ethylene diamine, 1,2-propylene diamine, 1,8-octane diamine, isophorone diamine, propane-2,2-cyclohexyl amine, and the like. Nonlimiting examples of suitable aromatic diamines include phenylene diamines and toluene diamines, for example o-phenylene diamine and p-tolylene diamine. Polynuclear aromatic diamines such as 4,4'-biphenyl diamine, methylene dianiline and monochloromethylene dianiline are also suitable.

Appropriate mixtures of crosslinking agents may also be used in the invention. The amount of the crosslinking agent in the coating composition provides an epoxy to amine molar ratio of 0.5 to 2.0, and in another embodiment, 0.75 to 1.5. In one embodiment, the epoxy to amine ratio is 0.75 to 1.5. In another embodiment the epoxy to amine ratio is 0.9 to 1.2.

A curing catalyst is added. As the curing catalyst, a basic catalyst which is known as an epoxy curing catalyst is employed. For example, tertiary amine, an organic phosphine compound, an imidazole compound and its derivative, etc. are employed. Specifically, triethanolamine, piperidine, dimethyl piperazine, 1,4diazacyclo(2,2,2) octane (triethyleneamine), pyridine, picoline, dimethylcyclohexylamine, dimethylhexylamine, benzildimethylamine, 2-(dimethylaminomethyl)phenol, 2,4, 6-tris(dimethylamino methyl)phenol, DBU (1 and 8-diazabicyclo(5,4,0 undecene-7)) or the phenol salt thereof, trimethylphosphine, triethyl phosphine, tributylphosphine, triphenylphosphine, tri(p-methylphenyl)phosphine, 2-methyl imidazole, 2,4-dimethylimidazole, 2-ethyl 4-methyl imidazole, 2-phenyl imidazole, 2-phenyl 4-methyl imidazole, 2-hepta-imidazole, etc. are employed. Alternatively, a boron trifluoride amine complex, dicyandiamide, organic acid hydrazide, diaminomaleonitrile and the derivative thereof, melamine and the derivative thereof, and latency catalysts, such as amine imide, may be employed. Examples of thiol include dithiol, such as 1,3-butanedithiol, 1,4-butanedithiol, 2,3-butanedithiol, 1,2-benzenedithiol, 1,3-benzenedithiol, 1,4-benzenedithiol, 1,10-decanedithiol, 1,2-ethanedithiol, 1,6-hexanedithiol, 1,9nonanedithiol.

With respect to pigments, it is contemplated in one general embodiment of the invention, that the coating composition would be a decorative coat composition and would, therefore, comprise one or more of the commonly employed opacifying pigments. Representative opacifying pigments include white pigments such as titanium dioxide, zinc oxide, antimony oxide, and the like and organic or inorganic chromatic pigments such as iron oxide, carbon black, phthalocyanine blue, and the like. Extender pigments such as calcium carbonate, clay, silica, talc, may be used. Pigments may be provided by means of pigmented toner resins, which may be conventional pigmented toner resins used in the automotive or aerospace coating industry. Pigmented toner resins typically comprise a solvent, a resin or polymer and one or more pigments.

in connection with the use of pigments, pigment dispersants may be used in compositionally appropriate amounts.

Suitable corrosion inhibitors may be either an organic additive or an inorganic additive. Suitable organic anti-corrosive additives include short aliphatic dicarboxylic acids such as maleic acid, succinic acid, and adipic acid; triazoles such as benzotriazole and tolytriazole; thiazoles suchs as mercaptobenzothiazole; thiadiazoles such as 2-mercapto-5hydrocarbylthio-1,3 ,4-thiadiazoles, 2-mercapto-5-hydrocarbyldithio-l,3 ,4- thiadiazoles, 2,5-bis(hydrocarbylthio)-l,3,4thiadiazoles, and 2,5-(bis)hydrocarbyldithio)-l,3,4thiadiazoles; sulfonates; and imidazolines. Suitable inorganic additives include chromates, borates, phosphates, silicates, nitrites, and molybdates.

In some embodiments, the coating composition will comprise one or more conventional solvents such as ketone, ester, alcohol, glycol ether, and glycol ether ester solvents. Exemplary, non-limiting examples of solvents that may be useful include xylene, n-butyl acetate, t-butylacetate n-butyl propionate, naptha, ethyl 3-ethoxypropionate, toluene, methyl ethyl ketone (MEK), acetone, methyl propyl ketone (MPK), methyl-n-amyl ketone (MAK), propylene glycol methylether acetate (PMA) and the like.

There may subsequently be applied to the decorative coat, one or more layers of a clear coat composition, such as a transparent urethane coating. The clearcoat may contain ultraviolet light absorbers such as hindered amines at a level ranging up to about 6% by weight of the vehicle solids as is well known in the art. The clearcoat can be applied by any application method known in the art, but preferably will be spray applied. If desired, multiple layers of basecoat and/or clearcoat can be applied. Typically, both the basecoat and the clearcoat will each be applied to give a dry film thickness of about 0.2 to about 6, and especially about 0.5 to about 3.0, mils.

## Claims

1. A coating system for application to a substrate having a sol-gel film layer applied thereon, the system comprising:
a. a decorative coat applied directly on top of the sol-gel film, wherein the decorative coating is a solvent borne composition comprising:
i. a polyepoxy resin;
ii. a polyamine crosslinker suitable for crosslinking the polyepoxy compound, wherein the amount of the crosslinker in the coating composition provides an epoxy to amine molar ratio of 0.5 to 2.0;
iii. one or more opacifying pigments; and
iv. a catalyst for catalyzing the crosslinking reaction of the polyepoxy compound and the polyamine crosslinker; and
b. optionally, a transparent clearcoat applied on top of the decorative coat.

2. The coating system of claim 1 wherein the polyepoxy resin is the polymerization reaction product of an epoxy functional acrylate monomer and at least one other polymerizable vinyl monomer.

3. The coating system of claim 2, wherein the epoxy functional acrylate monomer is selected from the group consisting of glycidyl acrylate, glycidyl methacrylate, beta-methylglycidyl acrylate, and beta-methylglycidyl methacrylate.

4. The coating system of any one of the claims 1 to 3, wherein the polyamine crosslinker is selected from the group consisting of primary and secondary diamines and polyamines.

5. The coating system of claim 2, wherein the substrate is a metal substrate having a sol -gel film layer applied thereon, the system comprising:
a. A pigmented film deposited directly on the sol-gel film, the pigmented film consisting of one or more layers of the solvent-borne decorative coating composition as defined in claim 1.

6. A coated substrate comprising:
a. A metal panel;
b. A sol-gel film layer applied onto the metal panel;
c. a solvent-borne decorative coat applied directly on top of the sol-gel film,
wherein the decorative coating is as defined in claim 1.

7. The coating system of any one of claims 1 to 5, or the coated substrate of claim 6, further comprising a corrosion inhibitor.

8. The coating system of claim 7, or the coated substrate of claim 7, wherein the corrosion inhibitor is selected from: short aliphatic dicarboxylic acids, triazoles, thiazoles, thiadiazoles, sulfonates, imidazolines, chromates, borates, phosphates, silicates, nitrites, or molybdates.

9. The coating system of any one of claims 1 to 5 or 7 or 8, or the coated substrate of claims 7 or 8, wherein the transparent clearcoat contains up to 6% by weight of ultraviolet light absorbers.

10. The coating system of claim 9 or the coated substrate of claim 9, wherein the ultraviolet light absorbers are hindered amines.

## Patentansprüche

1. Beschichtungssystem für einen Auftrag auf ein Substrat, das eine darauf aufgetragene Sol-Gel-Filmschicht aufweist, das System umfassend:
a. eine dekorative Beschichtung, die direkt auf dem Sol-Gel-Film aufgetragen ist, wobei die dekorative Beschichtung eine lösungsmittelhaltige Zusammensetzung ist, umfassend:
i. ein Polyepoxidharz;
ii. einen Polyaminvernetzer, der zum Vernetzen der Polyepoxidverbindung geeignet ist, wobei die Menge des Vernetzers in der Beschichtungszusammensetzung ein Molverhältnis von Epoxid zu Amin von 0,5 bis 2,0 bereitstellt;
iii. ein oder mehrere trübende Pigmente; und
iv. einen Katalysator zum Katalysieren der Vernetzungsreaktion der Polyepoxidverbindung und des Polyaminvernetzers; und
b. optional einen transparenten Klarlack, der über der dekorativen Beschichtung aufgetragen ist.

2. Beschichtungssystem nach Anspruch 1, wobei das Polyepoxidharz das Polymerisationsreaktionsprodukt eines epoxidfunktionellen Acrylatmonomers und mindestens eines anderen polymerisierbaren Vinylmonomers ist.

3. Beschichtungssystem nach Anspruch 2, wobei das epoxidfunktionelle Acrylatmonomer aus der Gruppe ausgewählt ist, bestehend aus Glycidylacrylat, Glycidylmethacrylat, beta-Methylglycidylacrylat und beta-Methylglycidylmethacrylat.

4. Beschichtungssystem nach einem der Ansprüche 1 bis 3, wobei der Polyaminvernetzer aus der Gruppe ausgewählt ist, bestehend aus primären und sekundären Diaminen und Polyaminen.

5. Beschichtungssystem nach Anspruch 2, wobei das Substrat ein Metallsubstrat ist, das eine darauf aufgetragene Sol-Gel-Filmschicht aufweist, das System umfassend:
a. einen pigmentierten Film, der direkt auf dem Sol-Gel-Film abgeschieden ist, wobei der pigmentierte Film aus einer oder mehreren Schichten der lösungsmittelhaltigen dekorativen Beschichtungszusammensetzung, wie in Anspruch 1 definiert, besteht.

6. Beschichtetes Substrat, umfassend:
a. eine Metallplatte;
b. eine Sol-Gel-Filmschicht, die auf die Metallplatte aufgetragen ist;
c. eine lösungsmittelhaltige dekorative Beschichtung, die direkt auf dem Sol-Gel-Film aufgetragen ist,
wobei die dekorative Beschichtung wie in Anspruch 1 definiert ist.

7. Beschichtungssystem nach einem der Ansprüche 1 bis 5 oder beschichtetes Substrat nach Anspruch 6, ferner umfassend einen Korrosionsinhibitor.

8. Beschichtungssystem nach Anspruch 7 oder beschichtetes Substrat nach Anspruch 7, wobei der Korrosionsinhibitor ausgewählt ist aus: kurzaliphatischen Dicarbonsäuren, Triazolen, Thiazolen, Thiadiazolen, Sulfonaten, Imidazolinen, Chromaten, Boraten, Phosphaten, Silikaten, Nitriten oder Molybdaten.

9. Beschichtungssystem nach einem der Ansprüche 1 bis 5 oder 7 oder 8 oder das beschichtete Substrat nach Anspruch 7 oder 8, wobei der transparente Klarlack bis zu 6 Gew.-% ultraviolette Lichtabsorber enthält.

10. Beschichtungssystem nach Anspruch 9 oder beschichtetes Substrat nach Anspruch 9, wobei die ultravioletten Lichtabsorber gehinderte Amine sind.

## Revendications

1. Système de revêtement pour application sur un substrat ayant une couche de film sol-gel appliquée sur celui-ci, le système comprenant :
a. un revêtement décoratif appliqué directement au-dessus du film sol-gel, le revêtement décoratif étant une composition en milieu solvant comprenant :
i. une résine polyépoxy ;
ii. un agent de réticulation polyamine approprié pour la réticulation du composé polyépoxy, la quantité de l'agent de réticulation dans la composition de revêtement fournissant un rapport molaire d'époxy à amine de 0,5 à 2,0 ;
iii. un ou plusieurs pigments opacifiants ; et
iv. un catalyseur destiné à catalyser la réaction de réticulation du composé polyépoxy et de l'agent de réticulation polyamine ; et
b. facultativement, un vernis transparent appliqué au-dessus du revêtement décoratif.

2. Système de revêtement selon la revendication 1 dans lequel la résine polyépoxy est le produit de réaction de polymérisation d'un monomère d'acrylate à fonctionnalité époxy et d'au moins un autre monomère vinylique polymérisable.

3. Système de revêtement selon la revendication 2, dans lequel le monomère d'acrylate à fonctionnalité époxy est choisi dans le groupe constitué par acrylate de glycidyle, méthacrylate de glycidyle, acrylate de bêta-méthylglycidyle et méthacrylate de bêta-méthylglycidyle.

4. Système de revêtement selon l'une quelconque des revendications 1 à 3, dans lequel l'agent de réticulation polyamine est choisi dans le groupe constitué par diamines et polyamines primaires et secondaires.

5. Système de revêtement selon la revendication 2, dans lequel le substrat est un substrat métallique ayant une couche de film sol-gel appliquée sur celui-ci, le système comprenant :
a. un film pigmenté déposé directement sur le film sol-gel, le film pigmenté étant constitué par une ou plusieurs couches de la composition de revêtement décoratif en milieu solvant telle que définie dans la revendication 1.

6. Substrat revêtu comprenant :
a. un panneau métallique ;
b. une couche de film sol-gel appliquée sur le panneau métallique ;
c. un revêtement décoratif en milieu solvant appliqué directement au-dessus du film sol-gel,
le revêtement décoratif étant tel que défini dans la revendication 1.

7. Système de revêtement selon l'une quelconque des revendications 1 à 5, ou substrat revêtu selon la revendication 6, comprenant en outre un inhibiteur de corrosion.

8. Système de revêtement selon la revendication 7, ou substrat revêtu selon la revendication 7, dans lequel l'inhibiteur de corrosion est choisi parmi : acides dicarboxyliques aliphatiques courts, triazoles, thiazoles, thiadiazoles, sulfonates, imidazolines, chromates, borates, phosphates, silicates, nitrites ou molybdates.

9. Système de revêtement selon l'une quelconque des revendications 1 à 5 ou 7 ou 8, ou substrat revêtu selon les revendications 7 ou 8, dans lequel le vernis transparent contient jusqu'à 6 % en poids d'absorbeurs de lumière ultraviolette.

10. Système de revêtement selon la revendication 9 ou substrat revêtu selon la revendication 9, dans lequel les absorbeurs de lumière ultraviolette sont des amines encombrées.
